# EUROPÄISCHE PATENTSCHRIFT

(11) **EP 3 372 887 B1**
(45) Veröffentlichungstag und Bekanntmachung des Hinweises auf die Patenterteilung: **15.09.2021**
(21) Anmeldenummer: 18160764.9
(22) Anmeldetag: 08.03.2018
(51) Int. Cl.: F16L 59/14, A62C 2/06, F16L 5/04, F16L 55/10

(54) **ANSCHLUSSSTÜCK**
ADAPTER
PIÈCE DE RACCORDEMENT

(30) Priorität: 08.03.2017 DE 102017104898
(43) Veröffentlichungstag der Anmeldung: 12.09.2018
(73) Patentinhaber: Düker GmbH, 97753 Karlstadt (DE)
(72) Erfinder: Jäger, Oliver, 89520 Heidenheim a.d. Brenz (DE); Amthor, Elfriede, 97753 Karlstadt (DE)
(74) Vertreter: Hoeger, Stellrecht & Partner Patentanwälte mbB

(56) Entgegenhaltungen:
- EP-A1- 1 512 434
- DE-U1-202013 002 916
- JP-A- 2008 215 037
- JP-A- 2010 190 034

## Beschreibung

Die Erfindung betrifft ein Anschlussstück, umfassend einen Gusskörper mit einer angeformten Steckmuffe, die eine Einstecköffnung und einen sich von der Einstecköffnung in die Steckmuffe hineinerstreckenden Einsteckkanal aufweist, welcher zur Aufnahme eines Spitzendes eines Kunststoffrohrs ausgebildet ist, wie beispielsweise aus der JP 2010-190034 bekannt.

Bei derartigen Anschlussstücken besteht das Problem, diese brandsicher auszubilden. Dokument EP 1512434A1 offenbart ein Anschlussstück als Brandschutzelement, zur Durchführung von Rohrleitungen. Z

Diese Aufgabe wird bei einem Anschlussstück der eingangs beschriebenen Art erfindungsgemäß durch die Merkmale des Anspruchs 1 gelöst.

Der Vorteil dieser Lösung ist darin zu sehen, dass damit in einfacher Weise die Anordnung eines Intumeszenzmaterials in das Anschlussstück integriert werden kann.

Ein Intumeszenzmaterial ist dabei ein Material, das sich bei einem Wärmeeintrag um ein Vielfaches seines Volumens aufbläht und in der Lage ist, den Einsteckkanal aufgrund seiner Aufblähung zu verschließen, insbesondere unter Zerstörung oder Deformation des Spitzendes des Kunststoffrohrs.

Besonders günstig ist es dabei, wenn bei einem derartigen Anschlussstück die Aufnahme sich zumindest abschnittsweise in Umfangsrichtung um den Einsteckkanal herum erstreckt, so dass damit eine das Spitzende zunächst teilweise umfassende Anbringung des Intumeszenzmaterials möglich ist. Insbesondere ist vorgesehen, dass sich die Aufnahme um den Einsteckkanal herum geschlossen umlaufend erstreckt.

Hinsichtlich der Anordnung des Intumeszenzmaterials in der Aufnahme sind die unterschiedlichsten Möglichkeiten denkbar.

Eine Möglichkeit wäre, das Intumeszenzmaterial als pastöses Material in die Aufnahme einzubringen.

Eine besonders vorteilhafte Lösung sieht vor, dass in der Aufnahme das Intumeszenzmaterial in Form von mindestens einem Bogensegmentkörper angeordnet ist.

Unter einem Bogensegmentkörper ist dabei ein Körper zu verstehen, der sich über ein Bogensegment um den Einsteckkanal herum erstreckt, wobei das Bogensegment unterschiedlichste Bogenlängen aufweisen kann.

Zum Einsetzen des Bogensegmentkörpers hat es sich als günstig erwiesen, wenn der Bogensegmentkörper in der Aufnahme im Abstand von einander angeordnete Segmentenden aufweist, so dass der Bogensegmentkörper zum Einsetzen in die Aufnahme deformiert werden kann und sich dann in der Aufnahme unter Ausbildung eines sich vergrößernden Abstandes zwischen den Segmentenden aufweiten kann.

Eine besonders günstige Lösung sieht vor, dass der mindestens eine Bogensegmentkörper in Form eines einseitig offenen Ringkörpers ausgebildet ist.

Darüber hinaus ist vorzugsweise vorgesehen, dass eine die Aufnahme radial außen liegend umschließende Steckmuffenumfangswand mindestens einen Durchbruch aufweist.

Ein derartiger Durchbruch hat den Vorteil, dass damit eine einfache Sichtkontrolle zur Überführung der Anwesenheit des Intumeszenzmaterials möglich ist. Zudem erreicht die außerhalb der Steckmuffe vorhandene Wärme über den Durchbruch direkt die Intumeszenzmasse und das Auslösen der Intumeszenzmasse wird dadurch beschleunigt.

Besonders vorteilhaft ist es, wenn der Durchbruch als ein sich parallel zur Mittelachse des Einsteckkanals erstreckender Schlitz ausgebildet ist.

Um eine zuverlässige Abdichtung des Spitzendes mit der Steckmuffe zu erreichen ist erfindungsgemäß vorgesehen, dass die Steckmuffe auf einer der Einstecköffnung gegenüberliegenden Seite der Aufnahme eine den Einstecckanal umschließende Ringnut aufweist, in welcher eine Dichtung angeordnet ist, welche eine Abdichtung zwischen dem Gusskörper und dem Spitzende des Kunststoffrohrs bewirkt.

Eine derartige Dichtung kann in unterschiedlichster Art und Weise ausgebildet sein.

Insbesondere ist dabei vorgesehen, dass die Dichtung einen Ringkörper und ausgehend von diesem in den Einsteckkanal hineinragende elastische Dichtlippen aufweist.

Bei derart ausgebildeten Dichtlippen besteht die Möglichkeit, beim Einstecken des Spitzendes die Dichtlippen zu deformieren und somit mindestens eine um das Spitzende umlaufende möglichst linienförmige Abdichtung zu erreichen und außerdem eine ausreichend hohe radiale Pressung innerhalb der Dichtung zu erzeugen.

Hinsichtlich der Ausbildung der Ringnut sind ebenfalls die unterschiedlichsten Varianten denkbar.

So sieht die erfindungsgemäße Lösung vor, dass die Ringnut ausgehend von dem Einsteckkanal in radialer Richtung eine geringere Ausdehnung aufweist als die Aufnahme.

Ferner ist vorzugsweise vorgesehen, dass die Ringnut in einem der Aufnahme zugewandten Bereich ausgehend von dem Einsteckkanal eine geringere radiale Tiefe aufweist, als in einem der Aufnahme abgewandten Bereich.

Diese Ausbildung der Ringnut erlaubt es, die Dichtung in der Ringnut vorteilhaft festzulegen.

Insbesondere ist dabei vorgesehen, dass eine Grundfläche der Ringnut sich in Richtung parallel zu der Mittelachse des Einstiegkanals von der Aufnahme weg konisch erweitert ausgebildet ist.

Damit besteht die Möglichkeit, mittels der Dichtung gleichzeitig das Spitzende gegen ein herausgleiten aus dem Einsteckkanal zu sichern.

Ferner ist vorzugsweise vorgesehen, dass zwischen der Ringnut und der Aufnahme ein radial außerhalb des Einsteckkanals liegender Übergangsbereich vorgesehen ist, durch welchen sich ein Fortsatz der Dichtung in die Aufnahme hinein erstreckt.

Diese Lösung hat den Vorteil, dass sich dadurch die Dichtung in einfacher Weise gegen ein Verschieben beim Einstecken des Spitzendes des Kunststoffrohrs in der Ringnut festlegen lässt.

Besonders günstig ist es, wenn der Fortsatz einen in der Aufnahme sich radial erweiternden Flanschkörper aufweist, so dass dadurch der Fortsatz in der Aufnahme eine Sicherung der Dichtung gegen ein Verschieben in Richtung parallel zur Mittelachse des Einsteckkanals beim Einstecken des Spitzendes ermöglicht.

Vorzugsweise ist der Flanschkörper so ausgebildet, dass er an einer quer zum Einsteckkanal verlaufenden, die Aufnahme begrenzenden Seitenwand des Steckmuffengehäuses anliegt, um somit die Dichtung in einfacher Weise in der Steckmuffe festlegen zu können.

Hinsichtlich der Anordnung des Anschlussstücks sind die unterschiedlichsten Möglichkeiten denkbar.

Prinzipiell könnte dieses Anschlussstück durch ein Ende eines Gussrohrs gebildet werden.

Eine besonders bevorzugte Lösung sieht vor, dass das Anschlussstück Teil eines Formstücks ist, wobei unter einem Formstück ein Teil zu verstehen ist, das von einem einfachen Rohr abweichende Formen aufweist, wie beispielsweise ein Rohrbogen, oder ein Ende einer Armatur etc.

Insbesondere ist bei dem erfindungsgemäßen Anschlussstück vorgesehen, dass dieses ein Teil eines einen Abzweig bildenden Formstücks ist.

Eine besonders vorteilhafte Lösung sieht vor, dass das Anschlussstück als ein Rohranschlussstück des Formstücks ausgebildet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Darstellung eines Formstücks mit einem erfindungsgemäßen Anschlussstück;
- Fig. 2: einen Schnitt längs Linie 2-2 in Fig. 1;
- Fig. 3: ein Schnitt ähnlich Fig. 2 mit einem in eine Steckmuffe des Anschlussstücks eingesteckten Spitzende eines Kunststoffrohrs;
- Fig. 4: einen Schnitt längs Linie 4-4 in Fig. 2;
- Fig. 5: einen Schnitt entsprechend Fig. 4 bei aufgeblähtem Intumeszenzmaterial und

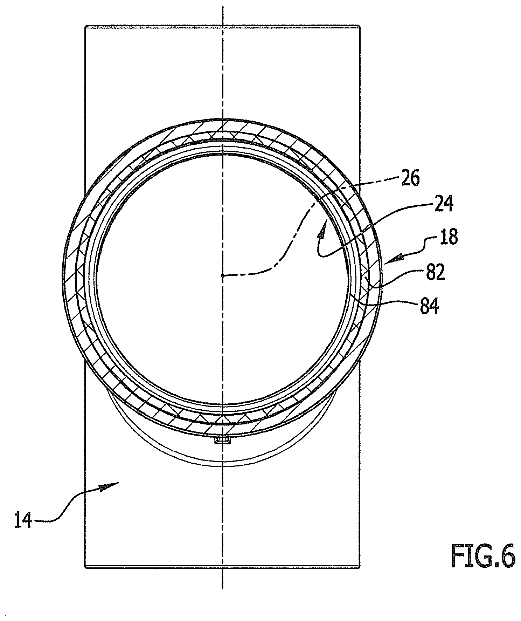

- Fig. 6: einen Schnitt längs Linie 6-6 in Fig. 2.

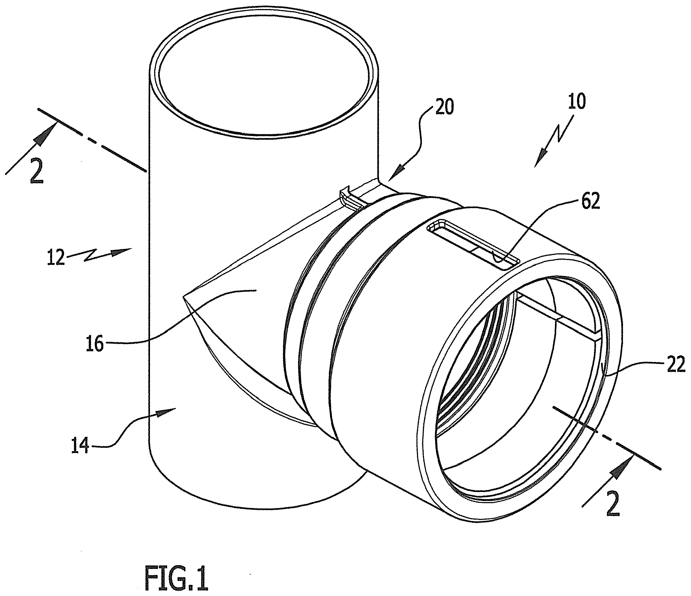

Ein in Fig. 1 dargestelltes Ausführungsbeispiel eines erfindungsgemäßen Brandschutzanschlussstücks 10 ist ein Teil eines Formstücks 12 aus Gusseisen, welches beispielsweise als Abzweig ausgebildet ist.

Das Formstück 12 umfasst ein Durchgangsstück 14 aus Gusseisen, von welchem ein das Brandschutzanschlussstück 10 umfassendes Rohranschlussstück 16 abzweigt, das seinerseits einstückig an das Durchgangsstück 14 angeformt ist und das eine Steckmuffe 18 aufweist, wobei das abzweigende Rohranschlussstück 16 und die Steckmuffe 18 Teil eines als Ganzes mit 20 bezeichneten Gusskörpers sind, der im dargestellten Ausführungsbeispiel insbesondere auch das Durchgangsstück 14 umfasst.

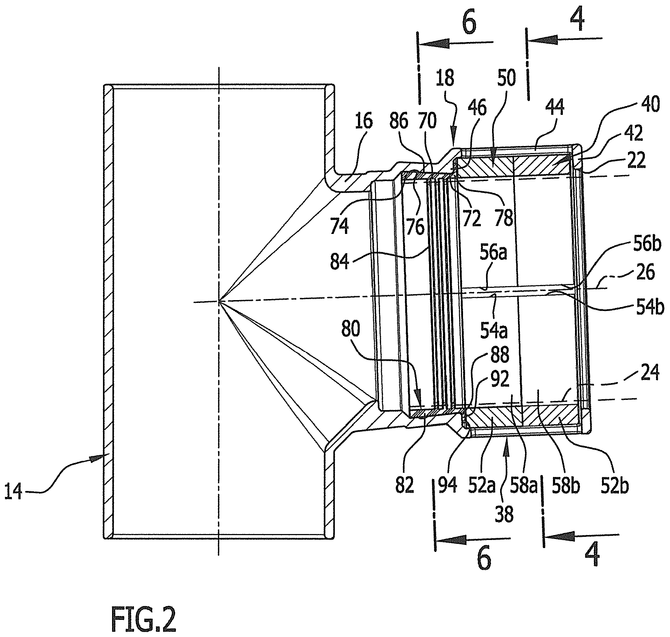

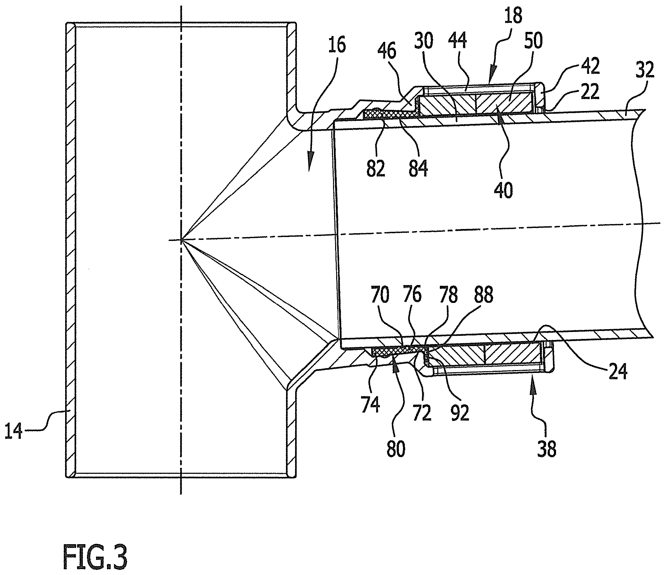

Die Steckmuffe 18 weist eine dem Durchgangsstück 14 abgewandte Einstecköffnung 22 auf, von welcher ausgehend sich ein koaxial zu einer Mittelachse 26 verlaufender Einsteckkanal 24 in die Steckmuffe 18 hineinerstreckt, wie in Fig. 2 dargestellt, wobei, wie in Fig. 3 dargestellt, in den Einsteckkanal 24 ausgehend von der Einstecköffnung 22 ein Spitzende 30 eines an das Rohranschlussstück 16 anzuschließenden Kunststoffrohrs 32 einsteckbar ist.

Wie insbesondere in Fig. 2 dargestellt, umfasst die Steckmuffe 18 ein Steckmuffengehäuse 38 und eine in diesem angeordnete Aufnahme 40, welche zum Einsteckkanal 24 hin offen ist und sich ausgehend von dem Einsteckkanal 24 in radialer Richtung zu der Mittelachse 26 des Einsteckkanals 24 erstreckt.

Die Aufnahme 40 ist insbesondere begrenzt durch eine sich ausgehend von der Einstecköffnung 22 radial zur Mittelachse erstreckende Seitenwand 42, eine insbesondere zylindrisch zur Mittelachse 26 verlaufende Steckmuffenumfangswand 44, die sich von der Seitenwand 42 ausgehend in Richtung des Durchgangsstücks 14 erstreckt, und eine der Einstecköffnung 22 abgewandt angeordnete Seitenwand 46, die sich ausgehend von der Steckmuffenumfangswand 44 in Richtung des Einsteckkanals 24 und quer zu diesem erstreckt.

Dabei sind die Seitenwand 42, die Steckmuffenumfangswand 44 und die Seitenwand 46 jeweils Teile des als Ganzes mit 38 bezeichneten Steckmuffengehäuses.

Ferner erstrecken sich vorzugsweise die Seitenwand 42 und die Seitenwand 46 in Richtung der Mittelachse 26 im Abstand voneinander und in quer zur Mittelachse 26 verlaufenden Richtungen, insbesondere senkrecht zur Mittelachse 26 parallel verlaufenden Richtungen.

In die Aufnahme 40 ist ein als Ganzes mit 50 bezeichnetes Intumeszenzmaterial eingesetzt, welches zwischen den Seitenwänden 42 und 44 angeordnet ist und an der Steckmuffenumfangswand 44 anliegt. Vorzugsweise erstreckt sich dabei das Intumeszenzmaterial 40 ausgehend von der Steckmuffenumfangswand 44 radial zur Mittelachse 26 hin bis zum Einsteckkanal 24.

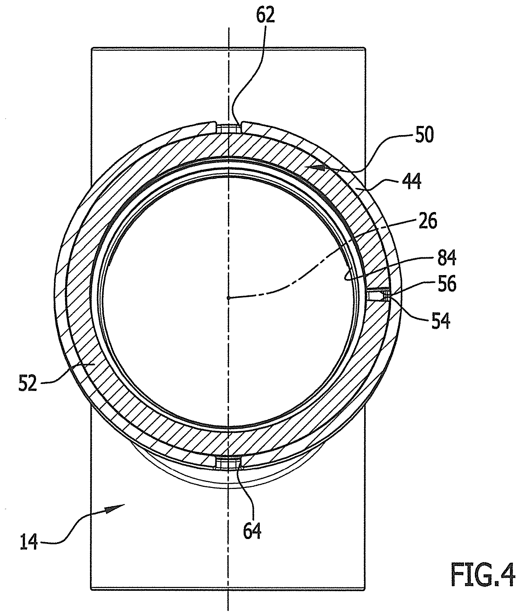

Wie in den Fig. 1, 2, 3 und 4 dargestellt, ist das Intumeszenzmaterial 50 in Form von mindestens einem Bogensegmentkörper 52 angeordnet, der insbesondere nicht ringförmig geschlossen ist, sondern zwei einander zugewandte Enden 54 und 56 aufweist, die beim Anlegen des Bogensegmentkörpers 52 an der Steckmuffenumfangswand 44 im Abstand voneinander angeordnet sind, es jedoch ermöglichen, den Bogensegmentkörper 52 spiralähnlich zu deformieren, um diesen durch die Einstecköffnung 22 in die Aufnahme 40 einzusetzen.

Beim dargestellten Ausführungsbeispiel sind in Richtung parallel zur Mittelachse 26 zwei aufeinanderfolgende Bogensegmentkörper 52a, 52b vorgesehen, die in Richtung parallel zur Mittelachse 26 aneinander anliegen, wobei beispielsweise der Bogensegmentkörper 52a mit seiner dem Bogensegmentkörper 52b abgewandten Seite an der Seitenwand 46 anliegt und der Bogensegmentkörper 52b mit seiner dem Bogensegmentkörper 52a abgewandten Seite an der Seitenwand 42 anliegt.

Jeder der Bogensegmentkörper 52 ist so dimensioniert, dass dieser im in die Aufnahme 40 eingesetzten Zustand einerseits an der Steckmuffenumfangswand 44 anliegt und andererseits der Steckmuffenumfangswand 44 gegenüberliegend eine Innenfläche 58 aufweist, die entweder den Einsteckkanal 24 begrenzt oder in geringfügigem radialem Abstand zur Mittelachse 26 außerhalb des Einsteckkanals 24 verläuft.

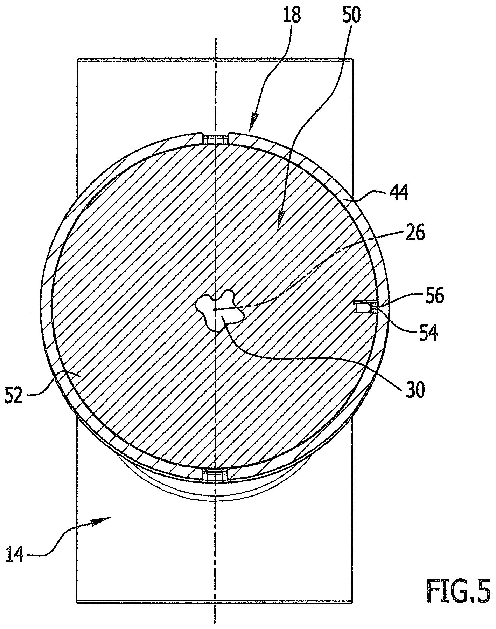

Beim Auftreten eines Brandes nahe des Formstücks 12 leitet das Gusseisen des Gusskörpers 20 die Wärme zu der Steckmuffe 18 so dass über die Seitenwände 42 und 46 und die Steckmuffenumfangswand 44 eine Aufheizung des Intumeszenzmaterials 50 erfolgt, das, wie in Fig. 5 dargestellt, sich derart aufbläht, dass dieses den Einsteckkanal 24 verschließt, wobei durch das Aufblähen des Intumeszenzmaterials 50 eine Deformation des durch die auftretende Temperatur ebenfalls erweichten Spitzendes 30 des Kunststoffrohrs 32 erfolgt, so dass dieses entweder verschlossen wird oder aufgrund seiner Erweichung zerstört wird und somit das aufgeblähte Intumeszenzmaterial 50 den gesamten Einsteckkanal 24 im Bereich der Steckmuffe 18 verschließt.

Die Steckmuffenumfangswand 44 ist ferner, wie in den Fig. 1, 2, 3 und 4, beispielhaft dargestellt, mit einander gegenüberliegenden Durchbrüchen 62 und 64 versehen, die beispielsweise als Schlitze ausgebildet sind, welche sich in der Steckmuffenumfangswand 44 parallel zur Mittelachse 26 zwischen den Seitenwänden 42 und 44 erstrecken.

Die Durchbrüche 62, 64 haben den Vorteil, dass sich damit in einfacher Weise überprüfen lässt, ob das Intumeszenzmaterial korrekt eingebaut ist.

Zur Abdichtung des Spitzendes 30 des Kunststoffrohrs 32 ist auf einer der Einstecköffnung 22 gegenüberliegenden Seite der Aufnahme 40 eine den Einsteckkanal 24 umschließende Ringnut 70 vorgesehen, in welche eine als Ganzes mit 80 bezeichnete Dichtung eingesetzt ist, die ihrerseits eine Abdichtung zwischen dem Gusskörper 20 im Bereich der Steckmuffe 18 und dem Spitzende 30 des Kunststoffrohrs 32 bewirkt.

Dabei umfasst die Dichtung 80 vorzugsweise einen in der Ringnut 70 sitzenden Ringkörper 82 und von dem Ringkörper 82 radial in Richtung des Einstecckanals radial zur Mittelachse 26 in Richtung des Einsteckkanals 24 vorspringende und insbesondere ohne eingestecktes Spitzende in den Einsteckkanal 24 hineinragende elastische Ringdichtlippen 84 (Fig. 2), die, wie in Fig. 3 dargestellt, bei dem in die Steckmuffe 18 eingesteckten Spitzende 30 deformiert werden und insbesondere linienförmig das Spitzende 30 umschließend mit diesem abdichten.

Erfindungsgemäß ist die Ringnut 70 in der Steckmuffe 80 so ausgebildet, dass sie ausgehend von dem Einsteckkanal 24 in radialer Richtung zur Mittelachse 26 eine geringere Ausdehnung aufweist, als die Ausnahme 40 für das Intumeszenzmaterial 50.

Ferner ist die Ringnut 70 so ausgebildet, dass ausgehend von dem Einstecckanal 24 deren radiale Tiefe in einem der Aufnahme 40 zugewandten Bereich 72 geringer ist als in einem der Aufnahme 40 abgewandten Bereich 74. Insbesondere lässt sich dies dadurch erreichen, dass die Nut 70 eine Grundfläche 76 aufweist, die bezogen auf die Mittelachse 26 des Einsteckkanals 24 von der Aufnahme 40 ausgehend in Richtung des Durchgangsstücks 14 sich konisch erweiternd verläuft.

Entsprechend dem Verlauf der Grundfläche 76 der Ringnut ist der Ringkörper 82 der Dichtung 80 ebenfalls mit einer sich konisch erweiternden Außenfläche 86 versehen, die bei in der Ringnut 70 sitzendem Ringkörper 82 an der Grundfläche 76 der Ringnut 70 anliegt.

Um zu verhindern, dass die Dichtung 80 in der Ringnut 70 beim Einschieben des Spitzendes 30 des Kunststoffrohrs 32 in Richtung des Durchgangsstücks 14 verschoben wird, geht die Ringnut 70 mit einem Übergangsbereich 78 in die Aufnahme 40 über, so dass ein an den Ringkörper 82 der Dichtung 80 angeformter, beispielsweise ringförmiger, Fortsatz 88 der Dichtung sich in die Aufnahme 40 hinein erstrecken kann und einen sich in der Aufnahme 40 radial erweiternden Flanschkörper 92 bildet, der an einer der Aufnahme 40 zugewandten Stützfläche 94 der Seitenwand 46 anliegt und somit zwischen der Seitenwand 46 und dem im Anschluss an diese angeordneten Bogensegmentkörper 52a liegt.

Der in der Aufnahme 40 liegende, sich radial erstreckende ringförmige Flanschkörper 92 schafft somit die Möglichkeit, die Dichtung 80, insbesondere den Ringkörper 82 der Dichtung 80, in der Ringnut 70 gegen eine Verschiebung in Richtung des Durchgangsstücks 14 festzulegen.

Darüber hinaus bewirkt der in Richtung von der Aufnahme 40 weg sich konisch erweiternde Verlauf der Grundfläche 76 der Ringnut 70 und der entsprechende konische Verlauf der Außenfläche 86 des Ringkörpers 82 der Dichtung bei eingestecktem Spitzende 30 des Kunststoffrohrs 32 eine Sicherung des Spitzendes 30 gegen ein Herausziehen aus dem Einsteckkanal 24, insbesondere angesichts der durch die ringförmigen elastischen Dichtlippen 84 auftretenden Pressung zwischen der Grundfläche 76 der Ringnut 70 und dem Spitzende 30 des Kunststoffrohrs 32.

## Patentansprüche

1. Anschlussstück, umfassend einen Gusskörper (20), mit einer angeformten Steckmuffe (18), die eine Einstecköffnung (22) und einen sich von der Einstecköffnung (22) in die Steckmuffe (18) hineinerstreckenden Einsteckkanal (24) aufweist, welcher zur Aufnahme eines Spitzendes (30) eines Kunststoffrohrs (32) ausgebildet ist, wobei zur Ausbildung des Anschlussstücks als Brandschutzanschlussstück die Steckmuffe (18) einer ein Steckmuffengehäuse (38) mit radial außerhalb des Einsteckkanals (24) angeordneten und zum Einsteckkanal (24) hin offenen Aufnahme (40) aufweist, in welcher ein Intumeszenzmaterial (50) angeordnet ist, wobei die Steckmuffe (18) auf einer der Einstecköffnung (22) gegenüberliegenden Seite der Aufnahme (40) eine den Einsteckkanal (24) umschließende Ringnut (70) aufweist, in welcher eine Dichtung (80) angeordnet ist, welche eine Abdichtung zwischen dem Gusskörper (20) und dem Spitzende (30) des Kunststoffrohrs (32) bewirkt,
**dadurch gekennzeichnet , dass** die Ringnut (70) ausgehend von dem Einsteckkanal (24) in radialer Richtung eine geringere Ausdehnung aufweist als die Aufnahme (40).

2. Anschlussstück nach Anspruch 1, **dadurch gekennzeichnet, dass** die Aufnahme (40) sich zumindest abschnittsweise in Umfangsrichtung um den Einsteckkanal (24) herum erstreckt und dass sich insbesondere die Aufnahme (40) um den Einsteckkanal (24) herum geschlossen umlaufend erstreckt.

3. Anschlussstück nach einem der voranstehenden Ansprüche, **dadurch gekennzeichnet, dass** in der Aufnahme (40) das Intumeszenzmaterial (50) in Form von mindestens einem Bogensegmentkörpern (52) angeordnet ist.

4. Anschlussstück nach Anspruch 3, **dadurch gekennzeichnet, dass** die Bogensegmentkörper in der Aufnahme (40) im Abstand voneinander angeordnete Segmentenden aufweisen und dass insbesondere in der Aufnahme (40) die Bogensegmentkörper in Form eines einseitig offenen Ringkörpers ausgebildet ist.

5. Anschlussstück nach einem der voranstehenden Ansprüche, **dadurch gekennzeichnet, dass** eine die Aufnahme (40) radial außenliegend umschließende Steckmuffenumfangswand (44) mindestens einen Durchbruch (62, 64) aufweist, und dass insbesondere der mindestens eine Durchbruch als ein sich parallel zur Mittelachse (26) des Einstecckanals (24) erstreckender Schlitz (62, 64) ausgebildet ist.

6. Anschlussstück nach einem der voranstehenden Ansprüche, **dadurch gekennzeichnet, dass** die Dichtung (80) einen Ringkörper (82) und ausgehend von diesem in den Einsteckkanal (24) hineinragende elastische Dichtlippen (84) aufweist.

7. Anschlussstück nach einem der voranstehenden Ansprüche, **dadurch gekennzeichnet, dass** die Ringnut (70) in einem der Aufnahme (40) zugewandten Bereich (72) ausgehend von dem Einsteckkanal (24) eine geringere radiale Erstreckung aufweist als in einem der Aufnahme (40) abgewandten Bereich (74).

8. Anschlussstück nach Anspruch 7, **dadurch gekennzeichnet, dass** eine Grundfläche (76) der Ringnut (70) sich in Richtung parallel zu der Mittelachse (26) des Einsteckkanals (24) von der Aufnahme (40) weg konisch erweiternd ausgebildet ist.

9. Anschlussstück nach Anspruch 8, **dadurch gekennzeichnet, dass** zwischen der Ringnut (70) und der Aufnahme (40) ein radial außerhalb des Einsteckkanals (24) liegender Übergangsbereich (78) vorgesehen ist, durch welchen sich ein Fortsatz (88) der Dichtung (80) in die Aufnahme (40) hinein erstreckt.

10. Anschlussstück nach Anspruch 9, **dadurch gekennzeichnet, dass** der Fortsatz (88) einen in der Aufnahme (40) sich radial erweiternden Flanschkörper (92) aufweist und dass insbesondere der Flanschkörper (92) an einer quer zum Einsteckkanal (24) verlaufenden, die Aufnahme (40) begrenzenden Seitenwand (46) des Steckmuffengehäuses (38) anliegt.

11. Anschlussstück nach einem der voranstehenden Ansprüche, **dadurch gekennzeichnet, dass** das Anschlussstück Teil eines Formstücks (12) ist.

12. Anschlussstück nach einem der voranstehenden Ansprüche, **dadurch gekennzeichnet, dass** das Anschlussstück ein Teil eines einen Abzweig bildendes Formstücks (12) ist.

13. Anschlussstück nach Anspruch 11 oder 12, **dadurch gekennzeichnet, dass** das Anschlussstück als ein Rohranschlussstück (16) des Formstücks (12) ausgebildet ist.

## Claims

1. Adapter comprising a cast member (20) with an integral connecting sleeve (18) having an insert opening (22) and an insert channel (24) extending from the insert opening (22) into the connecting sleeve (18), said channel designed to accommodate a spigot end (30) of a plastic pipe (32), wherein for the purpose of designing the adapter as a fire prevention adapter the connecting sleeve (18) has a connecting sleeve housing (38) with a receptacle (40) arranged radially on the outside of the insert channel (24) und open in the direction of the insert channel (24), an intumescent material (50) being arranged in said receptacle, wherein on a side of the receptacle (40) located opposite the insert opening (22) the connecting sleeve (18) has an annular groove (70) surrounding the insert channel (24) with a seal (80) arranged therein, said seal effecting sealing between the cast member (20) and the spigot end (30) of the plastic pipe (32),
**characterized in that** the annular groove (70) has less of an extension than the receptacle (40) in a radial direction proceeding from the insert channel (24).

2. Adapter as defined in claim 1, **characterized in that** the receptacle (40) extends around the insert channel (24) in a circumferential direction at least in sections and that, in particular, the receptacle (40) extends all around the insert channel (24) in a closed manner.

3. Adapter as defined in either one of the preceding claims, **characterized in that** the intumescent material (50) is arranged in the receptacle (40) in the form of at least one arced segment member (52).

4. Adapter as defined in claim 3, **characterized in that** the arced segment members in the receptacle (40) have segment ends arranged at a distance from one another and that, in particular, the arced segment members in the receptacle (40) are designed in the form of an annular member open on one side.

5. Adapter as defined in any one of the preceding claims, **characterized in that** a circumferential wall (44) of the connecting sleeve enclosing the receptacle (40) radially on the outside has at least one aperture (62, 64), and that, in particular, the at least one aperture is designed as a slot (62, 64) extending parallel to the central axis (26) of the insert channel (24).

6. Adapter as defined in any one of the preceding claims, **characterized in that** the seal (80) has an annular member (82) and elastic sealing lips (84) projecting from it into the insert channel (24).

7. Adapter as defined in any one of the preceding claims, **characterized in that** proceeding from the insert channel (24) the annular groove (70) has a smaller radial extension in an area (72) facing the receptacle (40) than in an area (74) facing away from the receptacle (40).

8. Adapter as defined in claim 7, **characterized in that** a base surface (76) of the annular groove (70) is designed to widen conically in a direction parallel to the central axis (26) of the insert channel (24) away from the receptacle (40).

9. Adapter as defined in claim 8, **characterized in that** a transition area (78) located radially outside of the insert channel (24) is provided between the annular groove (70) and the receptacle (40), an extension (88) of the seal (80) reaching into the receptacle (40) via said transition area.

10. Adapter as defined in claim 9, **characterized in that** the extension (88) has a flange member (92) widening radially in the receptacle (40) and that, in particular, the flange member (92) engages on a side wall (46) of the housing (38) of the connecting sleeve, said side wall extending transversely to the insert channel (24) and limiting the receptacle (40).

11. Adapter as defined in any one of the preceding claims, **characterized in that** the adapter is part of a moulded body (12).

12. Adapter as defined in any one of the preceding claims, **characterized in that** the adapter is part of a moulded body (12) forming a branch member.

13. Adapter as defined in claim 11 or 12, **characterized in that** the adapter is designed as a pipe connector (16) of the moulded body (12).

## Revendications

1. Pièce de raccordement comprenant un corps en fonte (20), avec un manchon emboîtable (18) installé par moulage, qui présente une ouverture d'enfichage (22) et un canal d'enfichage (24) s'étendant depuis l'ouverture d'enfichage (22) à l'intérieur du manchon emboîtable (18), le canal d'enfichage (24) étant réalisé pour recevoir une extrémité pointue (30) d'un tuyau en matière plastique (32), le manchon emboîtable (18) présentant, pour réaliser la pièce de raccordement en tant que pièce de raccordement de protection anti-incendie un boîtier de manchon emboîtable (38) avec un logement (40) disposé radialement à l'extérieur du canal d'enfichage (24) et ouvert en direction du canal d'enfichage (24), un matériau intumescent (50) étant disposé dans le logement (40) , le manchon emboîtable (18) présentant sur un côté, éloigné de l'ouverture d'enfichage (22), du logement (40), une rainure annulaire (70), qui entoure le canal d'enfichage (24) et dans laquelle est disposé un joint d'étanchéité (80), lequel entraîne une étanchéification entre le corps en fonte (20) et l'extrémité pointue (30) du tuyau en matière plastique (32),
**caractérisée en ce que** la rainure annulaire (70) présente, en partant du canal d'enfichage (24) dans le sens radial, une extension inférieure au logement (40).

2. Pièce de raccordement selon la revendication 1, **caractérisée en ce que** le logement (40) s'étend au moins par endroits dans la direction périphérique tout autour du canal d'enfichage (24), et **en ce que** notamment le logement (40) s'étend en périphérie de manière fermée tout autour du canal d'enfichage (24).

3. Pièce de raccordement selon l'une des revendications précédentes, **caractérisée en ce que** le matériau intumescent (50) est disposé sous la forme d'un moins un corps à segments en arc (52) dans le logement (40) .

4. Pièce de raccordement selon la revendication 3, **caractérisée en ce que** les corps à segments en arc présentent dans le logement (40) des extrémités de segment disposées à distance les unes des autres, et **en ce que** notamment les corps à segments en arc sont réalisés sous la forme d'un corps annulaire ouvert d'un côté dans le logement (40).

5. Pièce de raccordement selon l'une des revendications précédentes, **caractérisée en ce qu'**une paroi périphérique de manchon emboîtable (44) entourant radialement côté extérieur le logement (40) présente au moins un ajour (62, 64), et **en ce que** notamment l'au moins un ajour est réalisé en tant qu'une fente (62, 64) s'étendant de manière parallèle par rapport à l'axe central (26) du canal d'enfichage (24).

6. Pièce de raccordement selon l'une des revendications précédentes, **caractérisée en ce que** le joint d'étanchéité (80) présente un corps annulaire (82) et, en partant de celui-ci, des lèvres d'étanchéité (84) élastiques dépassant à l'intérieur du canal d'enfichage (24) .

7. Pièce de raccordement selon l'une des revendications précédentes, **caractérisée en ce que** la rainure annulaire (70) présente, dans une zone (72) tournée vers le logement (40), en partant du canal d'enfichage (24), une extension radiale plus petite que dans une zone (74), qui est détournée du logement (40).

8. Pièce de raccordement selon la revendication 7, **caractérisée en ce qu'**une surface de base (76) de la rainure annulaire (70) est réalisée de manière à s'élargir en forme de cône en s'éloignant du logement (40) dans une direction de manière parallèle par rapport à l'axe central (26) du canal d'enfichage (24).

9. Pièce de raccordement selon la revendication 8, **caractérisée en ce qu'**est prévue entre la rainure annulaire (70) et le logement (40) une zone de transition (78), qui est située radialement à l'extérieur du canal d'enfichage (24) et à travers laquelle un prolongement (88) du joint d'étanchéité (80) s'étend à l'intérieur du logement (40).

10. Pièce de raccordement selon la revendication 9, **caractérisée en ce que** le prolongement (88) présente un corps de bride (92) s'élargissant de manière radiale dans le logement (40), et **en ce que** notamment le corps de bride (92) repose sur une paroi latérale (46), s'étendant de manière transversale par rapport au canal d'enfichage (24) et délimitant le logement (40), du boîtier de manchon emboîtable (38).

11. Pièce de raccordement selon l'une des revendications précédentes, **caractérisée en ce que** la pièce de raccordement fait partie d'une pièce moulée (12) .

12. Pièce de raccordement selon l'une des revendications précédentes, **caractérisée en ce que** la pièce de raccordement fait partie d'une pièce moulée (12) formant un embranchement.

13. Pièce de raccordement selon la revendication 11 ou 12, **caractérisée en ce que** la pièce de raccordement est réalisée en tant qu'une pièce de raccordement tubulaire (16) de la pièce moulée (12).
